# FASCICULE DE BREVET EUROPEEN

(11) **EP 1 584 501 B1**
(45) Date de publication et mention de la délivrance du brevet: **23.01.2008**
(21) Numéro de dépôt: 04290921.8
(22) Date de dépôt: 07.04.2004
(51) Int. Cl.: B60G 17/015, B60G 21/055, H02K 7/116, H02K 7/06

(54) **Vérin rotatif à billes pour un dispositif anti-roulis de véhicule**
Kugeldrehantrieb für einen Stabilisator eines Radfahrzeuges
Rotary ball actuator for a vehicle anti roll bar

(43) Date de publication de la demande: 12.10.2005
(73) Titulaire: Delphi Technologies, Inc., Troy, MI 48007 (US)
(72) Inventeur: Blanchard, Arnaud, 92200 Neuilly/Seine (FR)
(74) Mandataire: Abello, Michel

(56) Documents cités:
- EP-A- 1 057 667
- EP-A- 1 219 523
- WO-A-99/67100
- WO-A-03/101805
- DE-A- 10 225 296

## Description

La présente invention concerne les vérins rotatifs électromécaniques et plus particulièrement les vérins destinés à être utilisés dans des dispositifs anti-roulis électromécanique.

Lorsqu'un véhicule tourne, l'accélération latérale produit un moment, orienté selon l'axe longitudinal du véhicule, entraînant un changement de l'assiette de la caisse du véhicule : les jambes de force des roues placées à l'intérieur du virage subissent une charge différente de celle que subissent les jambes de force des roues placées à l'extérieur du virage. Par rapport à la caisse, les supports de roue se déplacent d'une quantité différente le long de l'axe (quasiment vertical) des jambes de force. Par rapport à l'axe passant par les roues d'un train de roues, la caisse est inclinée d'un angle dit de roulis.

Afin de réduire le roulis d'un véhicule, il est connu de munir le train de roues avant et/ou le train de roues arrière d'un dispositif anti-roulis passif. Ce dernier consiste en une barre de torsion, globalement en forme de U, comportant une portion centrale rectiligne orientée selon l'axe des roues du train de roues, et deux bras situés à chacune des extrémités de ladite portion centrale et s'étendant globalement perpendiculaire à cette dernière. La portion centrale est liée à la caisse par une liaison de type pivot permettant une rotation de la barre autour de l'axe de la portion centrale. Les extrémités libres des bras sont respectivement reliées à chacun des supports de roue (par exemple, sur le porte moyeu ou la portion inférieure de la jambe de force de chacune des roues).

Dans un virage, la différence de quantité de déplacement vertical des supports de roue déforme la barre de torsion de manière à ce qu'un angle de torsion apparaisse entre les bras de celle-ci. Un couple de rappel élastique est alors créé, s'opposant au mouvement des supports de roue et réduisant le mouvement de roulis de la caisse. Aucune énergie n'est apportée au dispositif anti-roulis qui est alors qualifié de passif.

Bien que le roulis du véhicule soit amélioré dans les virages et, par voie de conséquence, le confort des passagers, la barre de torsion réduit l'isolation de la caisse par rapport à la route. En ligne droite, un choc causé par une aspérité sur la route sera ressenti par les passagers. De plus, la maniabilité du véhicule est modifiée.

Des dispositifs anti-roulis actifs sont connus. Par exemple, le document US 6 425 585 divulgue un dispositif anti-roulis actif électromécanique. Dans ce dispositif, la barre anti-roulis en forme de U est constituée de deux demi-barres reliées l'une à l'autre au niveau de la portion centrale de la barre anti-roulis au moyen d'un mécanisme de couplage. Le mécanisme de couplage comporte un moteur électrique solidaire de la première demi-barre. L'arbre moteur du moteur électrique est couplé au côté de faible couple d'un moyen d'amplification de couple à engrenages. Le côté de couple élevé du moyen d'amplification est relié à la deuxième demi-barre. En fonction de paramètres de roulis mesurés par des capteurs, une unité de contrôle actionne le moteur électrique. Lorsque le moteur électrique est alimenté les première et deuxième demi-barres sont couplées l'une à l'autre. En revanche, lorsque le moteur électrique n'est pas alimenté, les première et deuxième demi-barres sont découplées l'une de l'autre. Le moteur électrique est alimenté de manière à créer un angle entre les extrémités libres des première et deuxième demi-barres, c'est-à-dire de manière à appliquer un contre couple sur la caisse du véhicule apte à compenser le mouvement de roulis de celle-ci.

Par ailleurs, le dispositif anti-roulis actif décrit dans ce document comporte un frein électromécanique permettant de coupler le côté de faible couple du moyen d'amplification au bâti du mécanisme de couplage. Lorsque l'angle cible entre les extrémités des première et deuxième demi-barres est atteint, le frein est actionné pour générer un couple résistant de freinage permettant de maintenir les demi-barres dans l'orientation angulaire atteinte et de couper l'alimentation du moteur.

Ce type de dispositif est qualifié d'actif car de l'énergie est apportée au système pour appliquer un contre-couple. Des dispositifs anti-roulis semi-actifs électromécaniques sont également connus qui permettent un couplage ou un découplage sélectif des première et deuxième demi-barres. Aucune précontrainte n'est alors appliquée entre les deux demi-barres, et de tels dispositifs anti-roulis semi-actifs ne nécessitent pas d'énergie. Le document EP 1 157 586 divulgue une série de modes de réalisation d'un dispositif anti-roulis semi-actif électromécanique comportant des embrayages, des freins ou l'équivalent permettant de coupler/découpler les deux demi-barres en fonction d'une commande émise par une unité de contrôle sur la base de mesures du déplacement des jambes de force relevées par des capteurs appropriés. Le couplage/découplage peut être par exemple du type "tout ou rien" ou du type "proportionnel" de manière à ce qu'un impact sur une roue ne soit pas transmis à l'autre roue.

Dans le brevet américain, le moyen d'amplification du couple généré par le moteur électrique comporte une pluralité de trains d'engrenages. Il est connu que la fonction première d'un train d'engrenages est de réduire la vitesse de rotation. Le train d'engrenages permet également d'amplifier le couple mais avec un rendement faible, inférieur à 0,9, causé par des pertes importantes dues aux frottements. En conséquence, pour obtenir en sortie un couple utile élevé, le moteur électrique doit générer un couple primaire relativement important. Pour obtenir ces caractéristiques de puissance, le moteur électrique doit avoir certaines dimensions. Le mécanisme de couplage à l'intérieur duquel est logé le moteur électrique possédera donc des dimensions importantes. Par ailleurs, comme les pièces polaires sont constituées de terres rares, un tel moteur électrique est d'un coût élevé.

Il est à noter que le mode de réalisation décrit dans le brevet américain possède le désavantage que le chemin de propagation des efforts d'une roue à l'autre passe par le moteur électrique. La présence du frein électromécanique autorise un glissement relatif des deux demi-barres entre elles lorsqu'un couple extérieur trop élevé est appliqué au mécanisme de couplage de manière à protéger le moteur électrique.

L'invention a pour but de résoudre les inconvénients précités en proposant un vérin rotatif électromécanique destiné à équiper des dispositifs anti-roulis électromécaniques actifs ou semi-actifs.

Pour cela, la présente invention a pour objet un vérin rotatif électromécanique comportant :
- un cylindre portant une tige de cylindre ;
- un piston portant une tige de piston ; les tiges de cylindre et de piston étant alignées selon un axe dit principal du vérin ;
- un moyen électrique commandé de fourniture d'un couple primaire dont l'amplitude est réduite ; et,
- un moyen d'amplification apte à amplifier le couple primaire,
le vérin étant caractérisé en ce que le moyen d'amplification comporte au moins un amplificateur de couple constitué d'une première et d'une deuxième vis à billes, une partie de vis de la première vis à billes étant couplée audit moyen électrique commandé fournissant le couple réduit, une partie d'écrou de la première vis à billes et une partie d'écrou de la deuxième vis à billes étant solidaires l'une de l'autre et étant couplées au dit piston, et une partie de vis de la deuxième vis à billes étant couplée audit cylindre.

De préférence l'amplificateur de couple a un rendement supérieur à 0,9.

Dans un mode de réalisation, les parties d'écrou peuvent être couplées au piston au travers d'un élément cannelé ne transmettant au piston que le mouvement de rotation autour de l'axe principal des parties d'écrou.

Dans le mode de réalisation actuellement préféré, relativement à l'axe principal, un premier logement en forme d'hélice recevant les billes de la première vis à billes possède un premier sens parmi un sens positif et un sens négatif, et un deuxième logement en forme d'hélice recevant les billes de ladite deuxième vis à billes possède un deuxième sens opposé au premier sens du premier logement.

De préférence, un diamètre des billes de la première vis à billes est identique au diamètre des billes de la deuxième vis à billes.

De préférence, les première et deuxième vis à billes ne comportent respectivement pas de dispositif de recirculation des billes.

De préférence le moyen d'amplification comporte, en outre, un réducteur de vitesse, le moyen électrique commandé appliquant le couple primaire en entrée du réducteur de vitesse, et un couple secondaire généré en sortie du réducteur de vitesse étant appliqué à la partie de vis de la première vis à billes.

De préférence encore, le réducteur de vitesse comporte des premier et deuxième trains épicycloïdaux, comportant respectivement un pignon axial engrenant une pluralité de roues planétaires qui engrènent à leur tour une roue extérieure dentée intérieurement, le mouvement de la roue dentée intérieurement du premier train épicycloïdal étant rapporté sur l'axe du pignon du deuxième train épicycloïdal au moyen d'un bras coudé, la roue dentée intérieurement du deuxième train épicycloïdal portant extérieurement la partie de vis de la première vis à billes.

De préférence, les roues planétaires des premier et deuxième trains épicycloïdaux tournent respectivement autour d'axes qui sont disposés parallèlement à l'axe principal et qui sont solidaires du cylindre.

Dans un mode de réalisation le moyen électrique commandé de fourniture d'un couple initial d'amplitude réduite comporte un frein électromécanique apte à générer un couple initial résistant

Dans un mode de réalisation, le frein électromécanique fonctionne en tout ou rien de manière à coupler/découpler la tige de piston de la tige de cylindre.

Dans le mode de réalisation préféré, le moyen électrique commandé de fourniture d'un couple initial d'amplitude réduite comporte un moteur électrique.

Dans encore un autre mode de réalisation, le frein électromécanique est placé en série sur un arbre moteur dudit moteur électrique.

De préférence, le moteur électrique est apte à produire un couple initial d'amplitude réduite inférieure ou égale à 10 Nm.

L'invention a également pour objet un dispositif anti-roulis électromécanique semi-actif pour équiper au moins un train de roues d'un véhicule automobile, chacune des roues du train de roues étant couplée avec une mobilité verticale à une caisse du véhicule au moyen d'une jambe de force, le dispositif anti-roulis comportant :
- une barre de torsion en forme de U ayant une portion centrale destinée à être montée solidairement à la caisse et parallèlement à un axe du train de roues, et des premier et deuxième bras latéraux dont les extrémités libres sont destinées à être respectivement couplées aux jambes de force ; la barre de torsion étant composée d'une première demi-barre et d'une deuxième demi-barre reliées l'une à l'autre au niveau de la portion centrale au moyen d'un mécanisme électromécanique;
- au moins un capteur apte à mesurer au moins une variable cinématique du véhicule ; et,
- une unité de commande apte à acquérir la au moins une variable cinématique, à calculer une variable d'état de roulis caractérisant une situation de roulis du véhicule, et à émettre un signal de commande correspondant à la variable d'état en direction du mécanisme électromécanique pour actionner ce dernier,
le dispositif étant caractérisé en ce que le mécanisme électromécanique est un vérin rotatif électromécanique tel que présenté ci-dessus, le vérin comportant un frein électrique et ne comportant pas de moteur électrique apte à entraîner en rotation la première demi-barre relativement à la deuxième demi-barre.

L'invention a également pour objet un dispositif anti-roulis électromécanique actif pour équiper au moins un train de roues d'un véhicule automobile, chacune des roues du train de roues étant couplée avec une mobilité verticale à une caisse du véhicule au moyen d'une jambe de force, le dispositif anti-roulis comportant :
- une barre de torsion en forme de U ayant une portion centrale destinée à être montée solidairement à la caisse et parallèlement à un axe du train de roues, et des premier et deuxième bras latéraux dont les extrémités libres sont destinées à être respectivement couplées aux jambes de force ; la barre de torsion étant composée d'une première demi-barre et d'une deuxième demi-barre reliées l'une à l'autre au niveau de la portion centrale au moyen d'un mécanisme électromécanique;
- au moins un capteur apte à mesurer au moins une variable cinématique du véhicule ; et,
- une unité de commande apte à acquérir la au moins une variable cinématique, à calculer une variable d'état de roulis caractérisant une situation de roulis du véhicule, et à émettre un signal de commande correspondant à la variable d'état en direction du mécanisme électromécanique pour actionner ce dernier,
le dispositif étant caractérisé en ce que le mécanisme électromécanique est un vérin rotatif électromécanique tel que décrit ci-dessus.

L'invention a pour objet un véhicule automobile comportant au moins un train de roues, chacune des roues du train de roues étant couplée avec une mobilité verticale à une caisse du véhicule par l'intermédiaire d'une jambe de force, caractérisé en ce qu'il comporte un dispositif anti-roulis électromécanique tel que décrit ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue partielle en perspective de mise en situation du dispositif anti-roulis électromécanique selon la présente invention ;
- la figure 2 est une demi-coupe transversale du mode de réalisation actuellement préféré du vérin rotatif électromécanique équipant le dispositif anti-roulis de la figure 1 ; et,
- la figure 3 est un schéma de principe du vérin rotatif électromécanique de la figure 2.

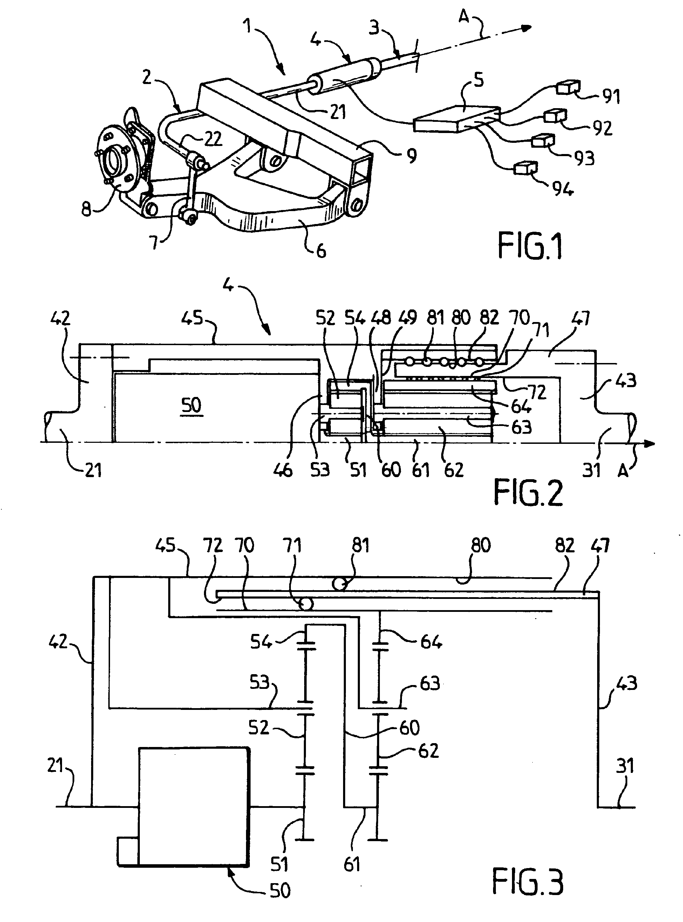

La figure 1 montre, partiellement, une barre anti-roulis 1 constituant la partie mécanique du dispositif anti-roulis selon l'invention. La barre anti-roulis 1 est globalement en forme de U. Elle comporte une première demi-barre 2 coudée et une deuxième demi-barre 3 coudée, raccordées l'une à l'autre par un vérin rotatif électromécanique 4. La barre anti-roulis 1 s'étend selon un axe principal A parallèle à l'axe des roues du train de roues équipé de ce dispositif anti-roulis.

La portion de la première demi-barre 2 s'étendant le long de l'axe principal A correspond à une première portion centrale 21, et la portion de la première demi-barre 2 s'étendant globalement perpendiculairement à l'axe principal A correspond à un premier bras latéral 22. La portion centrale 21 est couplée à la caisse du véhicule d'une manière connue et non représentée. L'extrémité libre du bras latéral 22 est couplée à un triangle de roue 6 au moyen, par exemple, d'un bras de liaison 7. Le triangle de roue 6 qui fait partie de la jambe de force de fixation de la roue est muni d'un support de roue 8. Le triangle de roue 6 est par ailleurs relié à la caisse du véhicule au moyen d'une suspension dont une portion 9 est représentée sur la figure 1. Une description identique pourrait être faite à propos de la connexion de la deuxième demi-barre 3 avec la deuxième roue du train de roues.

Par ailleurs, le dispositif anti-roulis électromécanique comporte une partie électronique. Le véhicule automobile comporte une série de capteurs 91-94 aptes à mesurer des variables physiques dont certaines permettent de caractériser ou d'anticiper une situation de roulis. Par exemple, un capteur d'accélération latérale mesure l'accélération latérale de la caisse du véhicule, des capteurs de vitesse de roues permettent d'évaluer la vitesse du centre de gravité du véhicule et un capteur de braquage mesure l'angle de braquage du volant de direction afin d'anticiper la trajectoire souhaitée par le conducteur du véhicule.

Les capteurs 91-94 sont respectivement connectés, via une interface d'acquisition, à un calculateur embarqué 5 possédant toutes les caractéristiques matérielles et logicielles d'un micro-ordinateur. En fonction des mesures instantanées réalisées par les capteurs 91-94, le calculateur embarqué 5 détermine la valeur d'une variable d'actionnement du vérin rotatif électromécanique 4. Le calculateur embarqué émet alors, sur un port de sortie, un signal d'actionnement correspondant à la valeur de la variable d'actionnement.

La figure 2 représente le mode de réalisation actuellement préféré du vérin rotatif électromécanique selon l'invention. La figure 2 est une demi-coupe axiale du vérin rotatif électromécanique 4 qui possède une forme globalement cylindrique autour de l'axe principal A.

La portion rectiligne 21 de la première demi-barre 2 est partiellement représentée sur la partie gauche de la figure 2, alors que la partie rectiligne 31 de la deuxième demi-barre 3 est partiellement représentée sur la partie droite.

La première portion rectiligne 21 est d'une pièce avec une première paroi radiale d'extrémité 42 du vérin 4. De manière similaire, la deuxième portion rectiligne 31 est d'une pièce avec une deuxième paroi radiale d'extrémité 43 opposée à la première paroi d'extrémité 42.

Le vérin 4 comporte un premier boîtier 45 cylindrique creux. Le premier boîtier 45 est fixé à la première paroi d'extrémité 42 au niveau de sa face radiale par une pluralité de vis. Plus précisément, la première paroi radiale d'extrémité 42 comporte une pluralité de trous taraudés et le premier boîtier 45 comporte une pluralité d'alésages taraudés correspondants pratiqués axialement dans l'épaisseur du premier boîtier 45. Des vis solidarisent la paroi radiale 42 et le premier boîtier 45 de manière à former le cylindre du vérin rotatif. La partie rectiligne 21 constitue la tige du cylindre.

Le vérin 4 comporte un deuxième boîtier 47 creux. Le deuxième boîtier 47 est solidarisé à la deuxième paroi latérale d'extrémité 43 par des moyens de fixation identiques à ceux qui ont été précédemment décrits. Le deuxième boîtier 47 et la paroi latérale d'extrémité 43 forment le piston du vérin 4. La partie rectiligne 31 correspond alors à la tige du piston.

Le premier boîtier 45 comporte intérieurement environ à mi longueur un premier palier 46 et un deuxième palier 48 espacés axialement l'un de l'autre de manière à ménager un logement. Afin que ce logement puisse être accessible lors du montage du vérin 4, le deuxième palier 48 est par exemple constitué par un disque annulaire placé dans un épaulement 49 ménagé sur la face intérieure de la paroi du premier boîtier 45, puis fixé au moyen d'une pluralité de vis.

Le premier palier 46 pourrait également être réalisé par une pluralité d'éléments faisant saillie radialement vers l'axe principal A et répartis annulairement de manière régulière sur la circonférence intérieure de la paroi du premier boîtier 45.

Un moteur électrique 50 est logé entre la première paroi radiale d'extrémité 42 et le premier palier 46. La coque du moteur 50 est solidarisée au premier palier 46 au moyen d'une pluralité de vis traversant le palier 46. Ainsi, le stator du moteur 50 est solidarisé au premier palier 46, au premier boîtier 45 et à la première demi-barre 2.

L'actionnement du moteur 50 est commandé par des signaux de commande générés par le calculateur embarqué 5 (figure 1).

Le moteur 50 comporte un rotor couplé en sortie à un arbre moteur 51 disposé le long de l'axe principal A. Le moteur électrique 50 peut être n'importe quel moteur, par exemple du type "sans balai" ou du type "pas à pas".

L'arbre moteur en sortie du moteur 50 est couplé à un réducteur de vitesse dont la fonction est de réduire la vitesse angulaire de rotation. Dans le mode de réalisation actuellement préféré, le réducteur de vitesse comporte des premier et deuxième trains épicycloïdaux.

L'extrémité de l'arbre moteur 51 est dentée et constitue le pignon d'un premier train épicycloïdal, comportant également une première pluralité de roues 52 composée typiquement de trois roues 52. Chaque roue 52 tourne autour d'un premier axe 53 décentré parallèle à l'axe principal A. Les premiers axes 53 sont fixés au premier palier 46. Radialement vers l'extérieur, la première pluralité de roues 52 engrène une roue extérieure 54 dentée intérieurement.

Le mouvement de rotation de la roue extérieure 54 est rapporté sur un deuxième arbre 61 s'étendant le long de l'axe principal A, au moyen par exemple d'un bras coudé 60.

Le deuxième arbre 61 constitue le pignon d'un deuxième train épicycloïdal comportant également une deuxième pluralité de roues 62. Chaque roue 62 tourne autour d'un deuxième axe 63 décentré disposé parallèlement à l'axe principal A. Les deuxièmes axes 63 sont respectivement fixés au deuxième palier 48. La deuxième pluralité de roues 62 engrène une deuxième roue extérieure 64 dont la face radialement à l'intérieur est dentée.

Il est à noter que la largeur des pièces constituant le deuxième train épicycloïdal est plus importante que celle des pièces constituant le premier train épicycloïdal. En effet, les couples générés dans le deuxième train sont plus importants et la structure de ce dernier doit être conçue pour supporter des contraintes élevées.

La sortie du dispositif de réduction de vitesse est couplée à l'entrée d'un amplificateur de couple dont la fonction première est d'augmenter le couple avec un rendement élevé. Pour ce faire, l'amplificateur du vérin selon l'invention comporte deux vis à billes.

La face axiale radialement à l'extérieur de la deuxième roue extérieure 64 constitue la partie de vis 70 d'une première vis à billes. La première vis à billes comporte, en outre, une pluralité de billes 71. La partie d'écrou 72 de la première vis à billes, disposée en regard de la partie de vis 70, est constituée par la face axiale radialement à l'intérieur du deuxième boîtier 47 cylindrique.

La face axiale radialement à l'extérieur du deuxième boîtier 47 forme la partie d'écrou 82 d'une deuxième vis à billes. La deuxième vis à billes comporte également une pluralité de billes 81. La partie de vis 80 de la deuxième vis à billes, placée en regard de la partie d'écrou 82, est constituée par une face axiale d'une pièce cylindrique fixée à l'intérieur du premier boîtier 45.

Le logement défini entre la partie de vis et la partie d'écrou de la première ou de la deuxième vis à billes, destiné à recevoir les billes, possède la forme d'une hélice ayant pour axe l'axe principal A. Dans le mode de réalisation actuellement préféré, l'hélice de la première vis à billes possède un sens d'enroulement opposé à celui de l'hélice de la deuxième vis à billes. Si la première hélice est par exemple une hélice à droite, la deuxième hélice est une hélice à gauche. Pour mémoire, une hélice est dite droite si l'axe du cylindre étant vertical, la partie vue de l'hélice monte de gauche à droite.

La figure 3 est une vue schématique du vérin rotatif 4 présenté à la figure 2. Les chiffres de référence de la figure 2 ont été utilisés pour les éléments identiques représentés schématiquement sur la figure 3.

Pour le premier train épicycloïdal, le pignon 51 de 20 mm de largeur comporte 12 dents. Il engrène les roues planétaires 52 ayant 30 dents. Finalement la roue extérieure 54 dentée intérieurement comporte 72 dents. Le premier train épicycloïdal présente donc un rapport de 6. Le deuxième train épicycloïdal est construit à l'identique, sauf que la largeur du pignon 61 du deuxième train est de 68 mm.

Le réducteur de vitesse possède un rapport total de 36. Si la vitesse en sortie du moteur 50 est de 3000 tours par minute, la vitesse de rotation de la deuxième roue extérieure 64 sera de 83 tours par minute. Le désavantage de l'utilisation d'engrenages est le faible rendement de l'ensemble du réducteur de vitesse. Pour le cas particulier du mode de réalisation présenté, le rendement total est évalué à 0,71. Si le moteur électrique 50 produit un couple primaire de 2,5 Nm, le couple appliquée sur la roue 64 ne sera pas de 90 Nm mais seulement de 64 Nm.

Le couple secondaire en sortie du réducteur de vitesse n'étant pas suffisant, il doit être amplifié au moyen d'un amplificateur de couple pour obtenir un couple utile important. L'amplificateur de couple est constitué de deux vis à billes. La première vis à billes possède un diamètre évalué à l'axe des billes de 67,4 mm et comporte des billes de 5 mm de diamètres disposées dans un logement en forme d'hélice à droite ayant un pas de 10 mm. La deuxième vis à billes possède un diamètre évalué à l'axe des billes de 80 mm et comporte des billes également d'un diamètre de 5 mm disposées dans un logement en forme d'hélice à gauche ayant un pas de 244 mm.

Lorsque la partie de vis 70 de la première vis à billes est entraînée en rotation dans le sens positif (i.e. sens des aiguilles d'une montre dans le plan orienté perpendiculaire à l'axe principal A) autour de l'axe principal A, la partie d'écrou 72 est entraîné en translation le long de l'axe principal A dans le sens positif, c'est-à-dire vers la droite de la figure 3. La translation de la partie d'écrou 72 de la première vis à billes entraîne la translation la partie d'écrou 82 de la deuxième vis à billes appartenant également au boîtier 47. La translation dans le sens positif de la partie d'écrou 82 met en mouvement de rotation la partie de vis 80 de la deuxième vis à billes dans un sens négatif autour de l'axe principal A, l'hélice de la deuxième vis à billes étant une hélice à gauche.

Il y a donc un mouvement de rotation relatif entre le premier et le deuxième boîtier. Par conséquent, il y a rotation autour de la tige du cylindre et la tige du piston, ou, dans le cas de l'utilisation du vérin 4 dans un dispositif anti-roulis, entre les première et deuxième demi-barres.

Le deuxième boîtier 47 subit un mouvement de translation relativement au premier boîtier 45. En conséquence, la longueur du vérin 4 augmente légèrement lors de son utilisation. Dans un dispositif anti-roulis, l'augmentation de la longueur de la barre anti-roulis est compensée au niveau des rotules de couplage de la barre de torsion avec les supports de roue. En variante, les parties d'écrou des première et deuxième vis à billes peuvent être couplées au piston par l'intermédiaire d'un élément cylindrique possédant des cannelures. Le piston possède alors un logement complémentaire destiné à recevoir l'élément cannelé. Le mouvement de translation des parties d'écrou n'est pas transmis au piston, l'élément cannelé coulissant axialement dans le logement du piston. En revanche, le mouvement de rotation des parties d'écrou est transmis au piston, l'élément cannelé engrenant le logement du piston.

Dans un dispositif anti-roulis, l'angle maximum de rotation recherché entre les première et deuxième demi-barres est de l'ordre de 6°. L'amplitude des mouvements relatifs de la partie d'écrou relativement à la partie de vis d'une même vis à billes est restreinte. Les billes, et en particulier la bille située axialement la plus à l'extérieur des billes de la vis à billes, ne sont pas susceptibles de quitter le logement en forme d'hélice ménagé entre la partie de vis et la partie d'écrou de la vis à billes. En conséquence, les première et deuxième vis à billes ne comportent pas de dispositif de recirculation des billes d'une première extrémité de la vis à billes vers l'autre extrémité.

L'amplificateur de couple de la figure 3 possède un rapport d'amplification de 24,4 avec un rendement élevé de 0,99. En conséquence, si un couple secondaire de 64 Nm est appliqué en entrée de l'amplificateur, un couple de 1546 Nm est généré en sortie de la deuxième vis à billes, sur le premier boîtier 45, la deuxième demi-barre étant fixe. Le couple utile transmis entre la première et la deuxième demi-barre correspond à la différence entre le couple exercé par le moteur électrique 50, via le moyen d'amplification, sur la première demi-barre, d'amplitude 1546 Nm, et le couple amplifié exercé par le moteur, via la partie d'écrou de la première vis à billes, sur le deuxième boîtier 47, d'amplitude 64 Nm. Le couple utile est donc de 1482 Nm.

En conclusion, l'utilisation de deux vis à billes ne présentant que des frottements réduits permet de construire un amplificateur de couple ayant un rendement élevé. L'ajustement des paramètres des première et deuxième vis à billes permet de construire un vérin rotatif présentant un taux d'amplification élevé : avec un moteur électrique ne générant qu'un couple primaire faible par exemple de 2,5 Nm, un couple utile important de l'ordre de 1500 Nm est généré entre le cylindre et le piston.

En pratique, dans le cas de l'utilisation dans un dispositif anti-roulis, la contrainte sur la puissance du moteur électrique dépend du couple utile recherché en sortie. Un couple de 1500 Nm correspond au couple nécessaire pour réduire le roulis de la caisse d'un véhicule du type tout terrain possédant une masse importante et un centre de gravité surélevé. Pour un véhicule de tourisme plus léger, un couple utile moins élevé est requis pour compenser le roulis du véhicule. Le moteur électrique utilisé est donc d'autant moins puissant.

Le vérin selon l'invention utilise un moteur électrique de puissance réduite. Or, les dimensions géométriques d'un moteur électrique dépendent de la puissance qu'il est apte à fournir. Ainsi, un moteur électrique de petites dimensions est utilisable dans le vérin rotatif selon l'invention. En conséquence, les dimensions du vérin sont elles aussi réduites. Par exemple et de manière indicative, le vérin rotatif selon l'invention tient dans un cylindre de 60 mm de rayon et de 300 mm de hauteur. Par ailleurs, le coût d'un moteur électrique dépend du volume des éléments magnétiques qu'il comporte. En conséquence, la réduction des dimensions du moteur utilisé dans l'invention permet d'avoir recours à des moteurs dont le coût est plus faible que celui des moteurs électriques utilisés dans l'art antérieur.

Le dispositif anti-roulis décrit de manière détaillée ci-dessus est du type actif. Il apparaîtra évident à l'homme du métier qu'un tel dispositif actif peut facilement être modifié pour en faire un dispositif anti-roulis semi-actif. Par exemple en remplaçant le moteur électrique 50 par un frein électromécanique ou l'équivalent apte à générer un couple primaire par frottement.

Dans le vérin selon l'invention, le couple utile d'amplitude élevée est transféré directement du premier boîtier 45 au deuxième boîtier 47 ou réciproquement.

Dans une variante du dispositif anti-roulis actif, le moteur électrique peut être protégé des effets de l'application de couples extérieurs d'intensité élevée en plaçant un frein entre l'arbre moteur et le pignon du premier train épicycloïdal du réducteur de vitesse.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Vérin rotatif électromécanique comportant un cylindre (45; 42) portant une tige de cylindre (21) solidaire dudit cylindre ; un piston (47; 43) portant une tige de piston (31) ; lesdites tiges de cylindre et de piston étant alignées selon un axe dit principal (A) dudit vérin ; un moyen électrique commandé de fourniture d'un couple primaire (50) d'amplitude réduite dont un stator est solidaire dudit cylindre ; et, un moyen d'amplification apte à amplifier ledit couple primaire, ledit vérin étant **caractérisé en ce que** ledit moyen d'amplification comporte au moins un amplificateur de couple constitué d'une première (70; 71; 72) et d'une deuxième (80; 81; 82) vis à billes, une partie de vis (70) de la première vis à billes étant couplée audit moyen électrique commandé fournissant ledit couple réduit, une partie d'écrou (72) de ladite première vis à billes et une partie d'écrou (82) de ladite deuxième vis à billes étant solidaires l'une de l'autre et étant couplées audit piston de manière à être solidaires en rotation dudit piston, et une partie de vis (80) de ladite deuxième vis à billes étant fixée audit cylindre.

2. Vérin selon la revendication 1, **caractérisé en ce que** ledit amplificateur de couple (70; 71; 72; 80; 81; 82) a un rendement supérieur à 0,9.

3. Vérin selon la revendication 1 ou la revendication 2, **caractérisé en ce que** lesdites parties d'écrou (72; 82) sont couplées audit piston au travers d'un élément cannelé ne transmettant audit piston que le mouvement de rotation autour dudit axe principal desdites parties d'écrou.

4. Vérin selon l'une des revendications 1 à 3, **caractérisé en ce que**, relativement à l'axe principal (A), un premier logement en forme d'hélice recevant les billes (71) de la première vis à billes possède un premier sens parmi un sens positif et un sens négatif, et **en ce qu'**un deuxième logement en forme d'hélice recevant les billes (81) de ladite deuxième vis à billes possède un deuxième sens opposé au premier sens dudit premier logement.

5. Vérin selon l'une des revendications 1 à 4, **caractérisé en ce qu**'un diamètre des billes (71) de ladite première vis à billes est identique à un diamètre des billes (81) de ladite deuxième vis à billes.

6. Vérin selon l'une des revendication 1 à 5, **caractérisé en ce que** lesdites première et deuxième vis à billes ne comportent respectivement pas de dispositif de recirculation des billes.

7. Vérin selon l'une des revendications 1 à 6, **caractérisé en ce que** ledit moyen d'amplification comporte, en outre, un réducteur de vitesse (51; 52; 54; 60; 61; 62; 64), ledit moyen électrique commandé (50) appliquant ledit couple primaire en entrée dudit réducteur de vitesse, et un couple secondaire généré en sortie dudit réducteur de vitesse étant appliqué à ladite partie de vis (70) de ladite première vis à billes.

8. Vérin selon la revendication 7, **caractérisé en ce que** ledit réducteur de vitesse comporte des premier (51; 52; 54) et deuxième (61; 62; 64) trains épicycloïdaux, comportant respectivement un pignon axial (51; 61) engrenant une pluralité de roues planétaires (52; 62) qui engrènent à leur tour une roue extérieure dentée intérieurement (54; 64), le mouvement de la roue dentée intérieurement (54) dudit premier train épicycloïdal étant rapporté sur l'axe du pignon (61) dudit deuxième train épicycloïdal au moyen d'un bras coudé (60), ladite roue dentée intérieurement (64) dudit deuxième train épicycloïdal portant extérieurement ladite partie de vis (70) de ladite première vis à billes.

9. Vérin selon la revendication 8, **caractérisé en ce que** lesdites roues planétaires (54; 64) desdits premier et deuxième trains épicycloïdaux tournent respectivement autour d'axes (53; 63) qui sont disposés parallèlement à l'axe principal (A) et qui sont solidaires dudit cylindre (45; 42).

10. Vérin selon l'une des revendications 1 à 9, **caractérisé en ce que** ledit moyen électrique commandé de fourniture d'un couple initial d'amplitude réduite comporte un frein électromécanique apte à générer un couple initial résistant

11. Vérin selon la revendication 10, **caractérisé en ce que** ledit frein électromécanique fonctionne en tout ou rien de manière à coupler/découpler ladite tige de piston de ladite tige de cylindre.

12. Vérin selon l'une des revendications 1 à 9, **caractérisé en ce que** ledit moyen électrique commandé de fourniture d'un couple initial d'amplitude réduite comporte un moteur électrique (50).

13. Vérin selon la revendication 10 ou la revendication 11 en combinaison avec la revendication 12, **caractérisé en ce que** ledit frein électromécanique est placé en série sur un arbre moteur dudit moteur électrique.

14. Vérin selon la revendication 12 ou la revendication 13, **caractérisé en ce que** ledit moteur électrique (50) est apte à produire un couple initial d'amplitude réduite inférieure ou égale à 10 Nm.

15. Dispositif anti-roulis électromécanique semi-actif pour équiper au moins un train de roues d'un véhicule automobile, chacune des roues dudit train de roues étant couplée avec une mobilité verticale à une caisse dudit véhicule au moyen d'une jambe de force, ledit dispositif anti-roulis comportant :
- une barre de torsion (1) en forme de U ayant une portion centrale destinée à être montée solidairement à ladite caisse et parallèlement à un axe dudit train de roues, et des premier et deuxième bras latéraux dont les extrémités libres sont destinées à être respectivement couplées audites jambes de force ; ladite barre de torsion étant composée d'une première demi-barre (2) et d'une deuxième demi-barre (3) reliées l'une à l'autre au niveau de ladite portion centrale au moyen d'un mécanisme électromécanique ;
- au moins un capteur (91-94) apte à mesurer au moins une variable cinématique dudit véhicule ; et,
- une unité de commande (5) apte à acquérir ladite au moins une variable cinématique, à calculer une variable d'état de roulis caractérisant une situation de roulis dudit véhicule, et à émettre un signal de commande correspondant à ladite variable d'état en direction dudit mécanisme électromécanique pour actionner ce dernier,
ledit dispositif étant **caractérisé en ce que** ledit mécanisme électromécanique est un vérin rotatif électromécanique (4) selon la revendication 10 ou la revendication 11, ledit vérin comportant un frein électrique et ne comportant pas de moteur électrique apte à entraîner en rotation ladite première demi-barre relativement à ladite deuxième demi-barre.

16. Dispositif anti-roulis électromécanique actif pour équiper au moins un train de roues d'un véhicule automobile, chacune des roues dudit train de roues étant couplée avec une mobilité verticale à une caisse dudit véhicule au moyen d'une jambe de force, ledit dispositif anti-roulis comportant :
- une barre de torsion (1) en forme de U ayant une portion centrale destinée à être montée solidairement à ladite caisse et parallèlement à un axe dudit train de roues, et des premier et deuxième bras latéraux dont les extrémités libres sont destinées à être respectivement couplées audites jambes de force ; ladite barre de torsion étant composée d'une première demi-barre (2) et d'une deuxième demi-barre (3) reliées l'une à l'autre au niveau de ladite portion centrale au moyen d'un mécanisme électromécanique ;
- au moins un capteur (91-94) apte à mesurer au moins une variable cinématique dudit véhicule ; et,
- une unité de commande (5) apte à acquérir ladite au moins une variable cinématique, à calculer une variable d'état de roulis caractérisant une situation de roulis dudit véhicule, et à émettre un signal de commande correspondant à ladite variable d'état en direction dudit mécanisme électromécanique pour actionner ce dernier,
ledit dispositif étant **caractérisé en ce que** ledit mécanisme électromécanique est un vérin rotatif électromécanique (4) selon l'une quelconque des revendications 12 à 14.

17. Véhicule automobile comportant au moins un train de roues, chacune des roues dudit train de roues étant couplée avec une mobilité verticale à une caisse dudit véhicule par l'intermédiaire d'une jambe de force, **caractérisé en ce qu'**il comporte un dispositif anti-roulis électromécanique selon la revendication 15 ou la revendication 16.

## Claims

1. Electromechanical rotary actuator having a cylinder (45, 42) carrying a cylinder rod (21) fixed to the said cylinder; a piston (47, 43) carrying a piston rod (31), the said cylinder rod and piston rod being aligned along an axis (A) called the principal axis of the said actuator; a controlled electrical means for supplying a primary torque (50) of low amplitude, a stator of this means being fixed to the said cylinder; and an amplification means for amplifying the said primary torque, the said actuator being **characterized in that** the said amplification means has at least one torque amplifier consisting of a first (70, 71, 72) and a second (80, 81, 82) ball screw, a screw part (70) of the first ball screw being coupled to the said controlled electrical means supplying the said low torque, a nut part (72) of the said first ball screw and a nut part (82) of the said second ball screw being fixed to each other and coupled to the said piston so as to be fixed with respect to rotation to the said piston, and a screw part (80) of the said second ball screw being fixed to the said cylinder.

2. Actuator according to Claim 1, **characterized in that** the said torque amplifier (70, 71, 72, 80, 81, 82) has an efficiency of more than 0.9.

3. Actuator according to Claim 1 or 2, **characterized in that** the said nut parts (72, 82) are coupled to the said piston by means of a grooved element which transmits only the rotary movement about the said principal axis of the said nut parts to the said piston.

4. Actuator according to any one of Claims 1 to 3, **characterized in that**, with respect to the principal axis (A), a first helical housing receiving the balls (71) of the first ball screw has a first direction chosen from a positive direction and a negative direction, and **in that** a second helical housing receiving the balls (81) of the said second ball screw has a second direction opposed to the first direction of the said first housing.

5. Actuator according to any one of Claims 1 to 4, **characterized in that** a diameter of the balls (71) of the said first ball screw is identical to a diameter of the balls (81) of the said second ball screw.

6. Actuator according to any one of Claims 1 to 5, **characterized in that** neither of the said first and second ball screws has a ball recirculation device.

7. Actuator according to any one of Claims 1 to 6, **characterized in that** the said amplification means additionally has a speed reducer (51, 52, 54, 60, 61, 62, 64), the said controlled electrical means (50) applying the said primary torque to the input of the said speed reducer, and a secondary torque generated at the output of the said speed reducer being applied to the said screw part (70) of the said first ball screw.

8. Actuator according to Claim 7, **characterized in that** the said speed reducer has first (51, 52, 54) and second (61, 62, 64) epicyclic trains, having respective axial pinions (51, 61) engaging with a plurality of planet gears (52, 62) which in turn engage with internally toothed wheels (54, 64), the movement of the internally toothed wheel (54) of the said first epicyclic train being transferred to the shaft of the pinion (61) of the said second epicyclic train by means of a cranked arm (60), the said internally toothed wheel (64) of the said second epicyclic train carrying on its outside the screw part (70) of the said first ball screw.

9. Actuator according to Claim 8, **characterized in that** the said planet gears (54, 64) of the said first and second epicyclic trains rotate, respectively, about axes (53, 63) which are positioned parallel to the principal axis (A) and which are fixed to the said cylinder (45, 42).

10. Actuator according to any one of Claims 1 to 9, **characterized in that** the said controlled electrical means for supplying an initial torque of low amplitude has an electromechanical brake for generating an initial resisting torque.

11. Actuator according to Claim 10, **characterized in that** the said electromechanical brake operates in an on/off mode, so as to couple the said piston rod to the said cylinder rod or uncouple it therefrom.

12. Actuator according to any one of Claims 1 to 9, **characterized in that** the said controlled electrical means for supplying an initial torque of low amplitude has an electric motor (50).

13. Actuator according to Claim 10 or 11 in combination with Claim 12, **characterized in that** the said electromechanical brake is placed in series on a driving shaft of the said electric motor.

14. Actuator according to Claim 12 or 13, **characterized in that** the said electric motor (50) is capable of producing an initial torque of low amplitude which is less than or equal to 10 Nm.

15. Semi-active electromechanical anti-roll device for fitting to at least one wheel train of a motor vehicle, each of the wheels of the said wheel train being coupled with vertical mobility to a body of the said vehicle by means of a strut, the said anti-roll device having:
- a U-shaped torsion bar (1) having a central portion intended to be mounted on and fixed to the said body parallel to an axis of the said wheel train, and first and second lateral arms, each of whose free ends is intended to be coupled to a corresponding one of the said struts; the said torsion bar being composed of a first half-bar (2) and a second half-bar (3) connected to each other in the said central portion by means of an electromechanical mechanism;
- at least one sensor (91-94) for measuring at least one kinematic variable of the said vehicle; and
- a control unit (5) for acquiring the said at least one kinematic variable, for calculating a roll state variable characterizing a roll situation of the said vehicle, and for transmitting a control signal corresponding to the said state variable towards the said electromechanical mechanism to actuate this mechanism,
the said device being **characterized in that** the said electromechanical mechanism is an electromechanical rotary actuator (4) according to Claim 10 or 11, the said actuator having an electric brake and not having an electric motor for rotating the said first half-bar relative to the said second half-bar.

16. Active electromechanical anti-roll device for fitting to at least one wheel train of a motor vehicle, each of the wheels of the said wheel train being coupled with vertical mobility to a body of the said vehicle by means of a strut, the said anti-roll device having:
- a U-shaped torsion bar (1) having a central portion intended to be mounted on and fixed to the said body parallel to an axis of the said wheel train, and first and second lateral arms, each of whose free ends is intended to be coupled to a corresponding one of the said struts; the said torsion bar being composed of a first half-bar (2) and a second half-bar (3) connected to each other in the said central portion by means of an electromechanical mechanism;
- at least one sensor (91-94) for measuring at least one kinematic variable of the said vehicle; and
- a control unit (5) for acquiring the said at least one kinematic variable, for calculating a roll state variable characterizing a roll situation of the said vehicle, and for transmitting a control signal corresponding to the said state variable towards the said electromechanical mechanism to actuate this mechanism,
the said device being **characterized in that** the said electromechanical mechanism is an electromechanical rotary actuator (4) according to any one of Claims 12 to 14.

17. Motor vehicle having at least one wheel train, each of the wheels of the said wheel train being coupled with vertical mobility to a body of the said vehicle by means of a strut, **characterized in that** it has an electromechanical anti-roll device according to Claim 15 or 16.

## Patentansprüche

1. Elektromechanischer Drehantrieb mit einem Zylinder (45; 42), der einen mit dem Zylinder verbundenen Zylinderschaft (21) aufweist, einem Kolben (47; 43), der einen Kolbenschaft (31) trägt, wobei der Zylinder- und der Kolbenschaft entlang einer Hauptachse (A) des Antriebs ausgerichtet sind, einem elektrisch gesteuerten Mittel zur Bereitstellung eines primären Drehmoments (50) mit reduzierter Amplitude, von welchem ein Stator mit dem Zylinder verbunden ist, und einem Verstärkungsmittel, welches das primäre Drehmoment verstärken kann, wobei der Antrieb **dadurch gekennzeichnet ist, dass** das Verstärkungsmittel wenigstens einen Drehmomentverstärker aufweist, der aus einer ersten (70; 71; 72) und einer zweiten (80; 81; 82) Kugelrollspindel besteht, wobei ein Schraubenteil (70) der ersten Kugelrollspindel mit dem elektrisch gesteuerten Mittel zur Bereitstellung des reduzierten Drehmoments gekoppelt ist, während ein Schraubenmutterteil (72) der ersten Kugelrollspindel und ein Schraubenmutterteil (82) der zweiten Kugelrollspindel miteinander verbunden und so mit dem Kolben gekoppelt sind, dass sie drehfest an dem Kolben befestigt sind, und wobei ein Schraubenteil (80) der zweiten Kugelrollspindel an dem Zylinder befestigt ist.

2. Antrieb gemäß Anspruch 1, **dadurch gekennzeichnet, dass** der Drehmomentverstärker (70; 71; 72; 80; 81; 82) einen Verstärkungsfaktor von mehr als 0,9 aufweist.

3. Antrieb gemäß Anspruch 1 oder Anspruch 2, **dadurch gekennzeichnet, dass** die Schraubenmutterteile (72; 82) über ein kannelliertes Element mit dem Kolben gekoppelt sind, das nur die Drehbewegung der Schraubenmutterteile um die Hauptachse auf den Kolben überträgt.

4. Antrieb gemäß einem der Ansprüche 1 bis 3, **dadurch gekennzeichnet, dass** bezüglich der Hauptachse (A) eine erste, die Kugeln (71) der ersten Kugelrollspindel aufnehmende schraubenförmige Ausnehmung eine erste Drehrichtung aufweist, die ausgewählt ist aus einer positiven und einer negativen Drehrichtung, und dadurch, dass eine zweite, die Kugeln (81) der zweiten Kugelrollspindel aufnehmenden schraubenförmige Ausnehmung eine zweite Drehrichtung aufweist, die der ersten Drehrichtung der ersten Ausnehmung entgegengesetzt ist.

5. Antrieb gemäß einem der Ansprüche 1 bis 4, **dadurch gekennzeichnet, dass** ein Durchmesser der Kugeln (71) der ersten Kugelrollspindel identisch mit einem Durchmesser der Kugeln (81) der zweiten Kugelrollspindel ist.

6. Antrieb gemäß einem der Ansprüche 1 bis 5, **dadurch gekennzeichnet, dass** die erste und die zweite Kugelrollspindel jeweils keine Kugelrückführeinrichtungen aufweisen.

7. Antrieb gemäß einem der Ansprüche 1 bis 6, **dadurch gekennzeichnet, dass** das Verstärkungsmittel außerdem ein Untersetzungsgetriebe (51; 52; 54; 60; 61; 62; 64) aufweist, wobei das elektrisch gesteuerte Mittel (50) das primäre Drehmoment an den Eingang des Untersetzungsgetriebes anlegt und ein am Ausgang des Untersetzungsgetriebes erzeugtes sekundäres Drehmoment an dem Schraubenteil (70) der ersten Kugelrollspindel angreift.

8. Antrieb gemäß Anspruch 7, **dadurch gekennzeichnet, dass** das Untersetzungsgetriebe erste (51; 52; 54) und zweite (61; 62; 64) Planetengetriebe aufweist, die jeweils ein axiales Zahnrad (51; 61) aufweisen, das mehrere Planetenräder (52; 62) antreibt, die wiederum ein äußeres Rad mit Innenverzahnung (54; 64) antreiben, wobei die Bewegung des Rades mit Innenverzahnung (54) des ersten Planetengetriebes mittels eines gekrümmten Arms (60) auf die Achse des Zahnrads (61) des zweiten Planetengetriebes übertragen wird, wobei das Rad mit Innenverzahnung (64) des zweiten Planetengetriebes außen das Schraubenteil (70) der ersten Kugelrollspindel trägt.

9. Antrieb gemäß Anspruch 8, **dadurch gekennzeichnet, dass** die Planetenräder (54; 64) des ersten und des zweiten Planetengetriebes jeweils um Achsen (53; 63) rotieren, die parallel zur Hauptachse (A) angeordnet sind und die mit dem Zylinder (45; 42) verbunden sind.

10. Antrieb gemäß einem der Ansprüche 1 bis 9, **dadurch gekennzeichnet, dass** das elektrische Steuermittel zur Bereitstellung eines anfänglichen Drehmoments mit reduzierter Amplitude eine elektromechanische Bremse aufweist, die ein anfängliches Widerstandsmoment erzeugen kann.

11. Antrieb gemäß Anspruch 10, **dadurch gekennzeichnet, dass** die elektromechanische Bremse in einem Ein-/Aus-Betrieb derart arbeitet, dass der Kolbenschaft mit dem Zylinderschaft gekoppelt/entkoppelt wird.

12. Antrieb gemäß einem der Ansprüche 1 bis 9, **dadurch gekennzeichnet, dass** das elektrisch gesteuerte Mittel zur Bereitstellung eines anfänglichen Drehmoments mit reduzierter Amplitude einen Elektromotor aufweist.

13. Antrieb gemäß Anspruch 10 oder Anspruch 11 in Kombination mit Anspruch 12, **dadurch gekennzeichnet, dass** die elektromechanische Bremse in Reihe auf einer Motorwelle des Elektromotors angeordnet ist.

14. Antrieb gemäß Anspruch 12 oder Anspruch 13, **dadurch gekennzeichnet, dass** der Elektromotor (50) ein anfängliches Drehmoment mit reduzierter Amplitude von höchstens 10 Nm erzeugen kann.

15. Halbaktiver elektromechanischer Stabilisator für wenigstens einen Radsatz eines Kraftfahrzeugs, wobei jedes Rad des Radsatzes mit einer vertikalen Beweglichkeit mittels einer Querstrebe mit einem Kasten des Fahrzeugs verbunden ist, wobei der Stabilisator aufweist:
- einen U-förmigen Torsionsstab (1), der einen zentralen Abschnitt aufweist, der dazu dient, fest an dem Kasten und parallel zu einer Achse des Radsatzes montiert zu werden, sowie erste und zweite Seiteriarme, deren freie Enden dazu dienen, jeweils mit den Querstreben verbunden zu werden; wobei der Torsionsstab aus einer ersten Stabhälfte (2) und einer zweiten Stabhälfte (3) zusammengesetzt ist, die auf Höhe des zentralen Abschnitts mittels eines elektromechanischen Mechanismus verbunden sind;
- wenigstens einen Sensor (91-94), der wenigstens eine kinematische Variable des Fahrzeugs messen kann; und
- eine Steuereinheit (5), welche die wenigstens eine kinematische Variable erfassen, eine Wank-Zustandsvariable, welche die Wandlage des Fahrzeugs charakterisiert, berechnen und ein von der Zustandsvariablen abhängiges Steuersignal in Richtung des elektromechanischen Mechanismus zu dessen Betätigung aussenden kann,
wobei der Stabilisator **dadurch gekennzeichnet ist, dass** der elektromechanische Mechanismus ein elektromechanischer Drehantrieb (4) gemäß Anspruch 10 oder Anspruch 11 ist, wobei der Antrieb eine Elektrobremse aufweist, und keinen Elektromotor zum Drehantrieb der ersten Stabhälfte bezüglich der zweiten Stabhälfte besitzt.

16. Aktiver elektromechanischer Stabilisator für wenigstens einen Radsatz eines Kraftfahrzeugs, wobei jedes Rad des Radsatzes mit einer vertikalen Beweglichkeit mittels einer Querstrebe mit einem Kasten des Fahrzeugs verbunden ist, wobei der Stabilisator aufweist:
- einen U-förmigen Torsionsstab (1), der einen zentralen Abschnitt aufweist, der dazu dient, fest an dem Kasten und parallel zu einer Achse des Radsatzes montiert zu werden, sowie erste und zweite Seitenarme, deren freie Enden dazu dienen, jeweils mit den Querstreben verbunden zu werden; wobei der Torsionsstab aus einer ersten Stabhälfte (2) und einer zweiten Stabhälfte (3) zusammengesetzt ist, die auf Höhe des zentralen Abschnitts mittels eines elektromechanischen Mechanismus verbunden sind;
- wenigstens einen Sensor (91-94), der wenigstens eine kinematische Variable des Fahrzeugs messen kann; und
- eine Steuereinheit (5), welche die wenigstens eine kinematische Variable erfassen, eine Wank-Zustandsvariable, welche die Wanklage des Fahrzeugs charakterisiert, berechnen und ein von der Zustandsvariablen abhängiges Steuersignal in Richtung des elektromechanischen Mechanismus zu dessen Betätigung aussenden kann,
wobei der Stabilisator **dadurch gekennzeichnet ist, dass** der elektromechanische Mechanismus ein elektromechanischer Drehantrieb (4) gemäß einem der Ansprüche 12 bis 14 ist.

17. Kraftfahrzeug mit wenigstens einem Radsatz, wobei jedes Rad des Radsatzes mittels einer Querstrebe mit vertikaler Beweglichkeit mit einem Kasten des Fahrzeugs verbunden ist, **dadurch gekennzeichnet, dass** es einen elektromechanischen Stabilisator gemäß Anspruch 15 oder Anspruch 16 aufweist.
